# EUROPÄISCHE PATENTSCHRIFT

(11) **EP 1 318 068 B1**
(45) Veröffentlichungstag und Bekanntmachung des Hinweises auf die Patenterteilung: **05.07.2006**
(21) Anmeldenummer: 02090396.9
(22) Anmeldetag: 06.12.2002
(51) Int. Cl.: B62D 55/32

(54) **Raupenfahrzeug mit geteiltem Raupenträger und Verfahren zur Montage und Demontage eines Raupenträgers**
Track-laying vehicle with separated track units and method for mounting and demounting a track unit
Véhicule à chenilles avec chenilles séparées et méthode pour monter et démonter des chenilles

(30) Priorität: 10.12.2001 DE 10162086
(43) Veröffentlichungstag der Anmeldung: 11.06.2003
(73) Patentinhaber: Terex-Demag GmbH & Co. KG, 66482 Zweibrücken (DE)
(72) Erfinder: Nöske, Ingo, 66482 Zweibrücken (DE); Riedinger, Harald, 66482 Zweibrücken (DE); Rutz, Werner, 66851 Queidersbach (DE)
(74) Vertreter: Meissner, Peter E.

(56) Entgegenhaltungen:
- DE-A- 2 938 504
- US-A- 4 258 463
- US-A- 4 683 632

## Beschreibung

Die Erfindung betrifft ein Raupenfahrzeug, insbesondere einen Fahrzeugkran, mit mindestens einem Raupenträger, der quer zur Laufrichtung einer um den Raupenträger umlaufenden Raupenkette geteilt ausgeführt ist, wobei zumindest ein Teil des Raupenträgers, welcher üblicherweise bezüglich der Kettenspannung der Raupenkette als Festseite ausgebildet ist, mit einem Fahrantrieb versehen und zumindest ein anderer Teil des Raupenträges zum Spannen der Raupenkette 5 ausgebildet ist und die Teile des Raupenträgers über Verbindungselemente lösbar miteinander verbindbar oder verbunden sind und wobei die Raupenkette aus einer Vielzahl von als Bodenplatten ausgebildeten Gliedern gebildet ist, die lösbar miteinander verbunden sind.

Raupenfahrwerke werden vielfach für mobile Arbeitsgeräte eingesetzt, die sehr hohe Gewichte aufweisen. Solche Arbeitsgeräte können beispielsweise Fahrzeugkrane für den Schwerlastbereich sein. Im Regelfall weist das Raupenfahrwerk eines solchen Fahrzeugkrans zwei Raupenträger auf, die jeweils mit einer Raupenkette versehen sind. Ein solcher Raupenträger kann durchaus ein Gewicht von beispielsweise 80 bis 85 t besitzen, wovon die Raupenkette etwa die Hälfe ausmacht. Wegen dieses hohen Gewichts und wegen der großen Abmessungen werden solche Raupenträger vielfach in zwei Hälften geteilt ausgeführt, um diese separat transportieren zu können. Üblicherweise werden die Teile des Raupenträgers durch Bolzenverbindungen, insbesondere hydraulisch betätigbare Bolzenverbindungen zusammengehalten. Nach Öffnen der Kette wird diese ebenso wie die beiden Teile des Raupenträgers jeweils als separate Einheit transportiert. In manchen Fällen wird die Kette aber auch nochmals weiter unterteilt und in kleineren Einheiten transportiert. Die Montage eines Raupenträgers an der vorgesehenen Einsatzstelle verläuft umgekehrt und ist wegen der großen Gewichte der einzelnen Teile außerordentlich aufwendig.

Aufgabe der vorliegenden Erfindung ist es, ein Raupenfahrzeug der gattungsgemäßen Art wie aus DE 2938504 bekannt dahingehend zu verbessern, dass der Aufwand für die Demontage, den Transport und die erneute Montage an der vorgesehenen Einsatzstelle des Raupenfahrzeugs deutlich vermindert wird. Femer soll ein Verfahren zur Demontage und ein Verfahren zur Montage eines Raupenträgers vorgeschlagen werden.

Gelöst wird diese Aufgabe bei einem gattungsgemäßen Raupenfahrzeug durch die kennzeichnenden Merkmale des Patentanspruchs 1. Vorteilhafte Weiterbildungen des erfindungsgemäßen Raupenfahrzeugs sind in den Unteransprüchen 2 bis 13 angegeben. Im Patentanspruch 14 ist ein Verfahren zur Demontage eines Raupenträgers und im Patentanspruch 15 ein Verfahren zur Montage eines solchen Raupenträgers angegeben.

Der Kern der vorliegenden Erfindung liegt in der Überlegung, dass der Aufwand für die Montage und Demontage eines geteilt ausgeführten Raupenträgers wesentlich vereinfacht werden kann, wenn die Raupenkette entsprechend der geteilt ausgeführten Tragkonstruktion des Raupenträgers ebenfalls geteilt und jeweils am Teil des Raupenträgers verbleibend als Einheit mit diesem Teil des Raupenträgers transportiert wird. Um die Raupenkette möglichst einfach demontieren und später wieder montieren zu können, ist eine Hilfsvorrichtung als Montage- und Demontagehilfe vorgesehen, die an einem der Teile des Raupenträgers angeordnet ist. Diese Hilfsvorrichtung ist mit einem Eingriffsglied versehen oder versehbar, welches zur Herstellung einer vorrübergehenden antriebstechnischen Verbindung zwischen der Hilfsvorrichtung und der Raupenkette einsetzbar ist. Die Hilfsvorrichtung ist dabei so konzipiert, dass sie das Eingriffsglied unabhängig vom Fahrantrieb in Längsrichtung des Raupenträgers wahlweise hin- und herbewegen kann. Zweckmäßigerweise ist diese Hilfsvorrichtung fest mit einem der Teile des Raupenträgers verbunden. Damit ist die Möglichkeit gegeben, ohne wesentlichen Aufwand die Raupenkette mit ihren äußerst schweren einzelnen Gliedern gezielt so bewegen zu können, dass die Montage oder Demontage, d. h. im Regelfalls das Schließen oder Öffnen von Bolzenverbindungen, erheblich erleichtert wird. Wenngleich ein Raupenträger grundsätzlich auch in mehr als zwei Teile unterteilt werden könnte, ist es erfindungsgemäß bevorzugt, eine Aufteilung in genau zwei Teile vorzusehen.

In den meisten Fällen weist ein Raupenträger einen Fahrantrieb an einem der beiden Teile auf. Es kann aber auch vorgesehen sein, dass beide Teile des Raupenträgers jeweils mit einem Fahrantrieb ausgestattet sind. Einer der beiden Teile, im Regelfalls derjenige ohne einen eigenen Fahrantrieb, ist dabei üblicherweise als Spannseite konstruiert, um die Spannung der Raupenkette, die sich unter der Betriebslastung infolge von Verschleiß stetig verändert, auf dem erforderlichen Wert halten bzw. einstellen zu können.

Zweckmäßigerweise wird die Hilfsvorrichtung im Nahbereich des Obertrums der Raupenkette angeordnet, und zwar vorzugsweise an dem mit einem Fahrantrieb versehenen Teil des Raupenträgers, also an der sogenannten Festseite, wenn der Raupenträger nur einen einzigen Fahrantrieb aufweist.

Vorteilhaft ist die Hilfsvorrichtung in Form eines motorisch antreibbaren Linearantriebs ausgebildet, beispielsweise als hydraulischer Zylinder-Kolben-System. Als Eingriffsglied wird zweckmäßig ein Sicherungsbolzen verwendet, der durch eine jeweils zwischen zwei unmittelbar benachbarten Gliedern der Raupenkette vorgesehene Kettenaussparung hindurch in ein Schiebestück einsetzbar ist, das mit einem ausfahrbaren Teil der Hilfsvorrichtung, also beispielsweise mit der ausfahrbaren Kolbenstange eines hydraulischen Zylinder-Kolben-Systems verbunden ist. In letzterem Fall wird das Schiebestück zweckmäßig über ein Drehgelenk mit horizontaler Drehachse an der ausfahrbaren Kolbenstange befestigt. Es empfiehlt sich, das Schiebestück über eine Linearführung schienenartig zu führen, um eine exakte Bewegung auf die Raupenkette übertragen zu können. Zur Begrenzung des Verschiebeweges des Schiebestücks kann ein Anschlag vorgesehen sein, der vorteilhaft als lösbar angeordneter Anschlagbolzen ausgebildet ist. Weiterhin ist es vorteilhaft, die Hilfsvorrichtung durch ein Abdeckblech vor Verschmutzung zu schützen. Dieses Abdeckblech überdeckt im Falle der Ausbildung der Hilfsvorrichtung als hydraulisches Zylinder-Kolben-System das Zylindergehäuse. Damit auch die ausfahrbare Kolbenstange vor Verschmutzung gesichert ist, ist es weiterhin zweckmäßig, ein Schiebeblech vorzusehen, welches mit dem Schiebestück selbsttätig mitbewegbar ist.

Das erfindungsgemäße Verfahren zur Demontage eines Raupenträges an einem Raupenfahrzeug sieht vor, dass die Raupenkette zunächst mit der vorgesehenen Trennstelle zweier unmittelbar benachbarter Glieder der Raupenkette durch Betätigung des Fahrantriebes des Raupenträgers etwa bündig mit der Trennstelle der beiden Teile des Raupenträgers positioniert wird. Beide Trennstellen sollen also etwa in einer gemeinsamen Trennebene liegen. Um die Raupenkette an der Trennstelle öffnen zu können, muss diese zuvor entspannt werden. In einem weiteren Schritt des Verfahrens wird die Hilfsvorrichtung mit ihrem verfahrbaren Teil am Obertrum der Raupenkette so positioniert, dass das Eingriffsglied zur Herstellung einer antriebstechnischen Verbindung zwischen der Raupenkette und der Hilfsvorrichtung außerhalb der vorgesehenen Trennstelle eingesetzt werden kann. Das Eingriffsglied wird also nicht an der Trennstelle eingeführt, da die Hilfsvorrichtung die Raupenkette vor- und zurückbewegen können muss. Nach Herstellung der antriebstechnischen Verbindung wird die Kettenverbindung an der vorgesehenen Trennstelle der Raupenkette gelöst, indem die üblicherweise verwendeten Scharnierbolzen entfernt werden. Dabei kann vorgesehen sein, dass durch gezielte Betätigung der Verfahrbewegung der Hilfsvorrichtung eine Lockerung der Verbindung bewirkt wird, damit diese nicht unter Spannung steht und die Scharnierbolzen leichter herausgezogen werden können. Anschließend werden die Verbindungselemente der beiden Teile der Tragkonstruktion des Raupenträgers gelöst. Danach werden die beiden Teile des Raupenträgers durch Betätigung des Fahrantriebs, der sich an dem die Hilfsvorrichtung aufweisenden Teil des Raupenträgers befindet, ein Stück (beispielsweise 1 Meter) auseinandergefahren, wobei die Hilfsvorrichtung mit dem in Eingriff bleibenden Eingriffsglied entsprechend zurückgefahren wird. Hierdurch liegt ein Stück des Untertrums der Raupenkette frei, so dass dort zumindest eine Kettenverbindung sehr leicht zugänglich ist. Nahe an der Trennstelle des Teils des Raupenträgers, der nicht mit der Hilfsvorrichtung versehen ist, wird dann im Untertrum der Raupenkette die Verbindung zweier Glieder der Raupenkette gelöst. Anschließend werden die Enden der aufgetrennten Raupenkette an den jeweiligen Teilen des Raupenträgers lagegesichert verzurrt, so dass sich die Raupenkette nicht mehr gegenüber dem jeweiligen Teil des Raupenträgers verlagern kann. Schließlich werden die Teile des Raupenträgers jeweils als zusammengehörige Transporteinheit mit dem jeweils zugeordneten Teil der Raupenkette transportiert.

Das erfindungsgemäße Verfahren zur Montage eines nach dem Verfahren gemäß Anspruch 14 demontierten Raupenträgers läuft im Wesentlichen in umgekehrter Reihenfolge ab. Zunächst wird der nicht mit der Hilfsvorrichtung versehene Teil des Raupenträgers auf dem Boden abgestellt und der an ihm angeordnete Teil der Raupenkette entzurrt. Das mit der Hilfsvorrichtung versehene Teil des Raupenträgers wird mittels eines Hilfskrans angehoben und schwebend derart ausgerichtet, dass seine Längsachse mit der Längsachse des anderen Teils des Raupenträgers in einer gemeinsamen Ebene liegt. Dabei wird das erste Glied im Untertrum des ihm zugeordneten Teils der Raupenkette, nachdem es soweit entzurrt wurde, dass es schräg nach unten frei hängt (vorzugsweise in einem Winkel von etwa 45° zur Horizontalen), in Montageposition mit dem entsprechenden Glied des Untertrums des Teils der Raupenkette am anderen Teil des Raupenträgers gebracht. In dieser Stellung werden dann die beiden Teile der Raupenkette im Untertrum wieder miteinander verbunden. Anschleißend kann der mit der Hilfsvorrichtung versehene Teil des Raupenträges von dem Hilfskran auf dem Boden abgesetzt werden. Durch Betätigung des Fahrantriebs bei gleichzeitigem Ausfahren der Hilfsvorrichtung in Richtung auf den anderen Teil (im Regelfall die Spannseite des Raupenträgers) werden dann die beiden Teile des Raupenträgers wieder zusammengefahren. Anschließend werden die Verbindungselemente zur Verbindung der Raupenträgerteile wieder eingesetzt. Danach werden mit Hilfe der Verfahrbewegung der Hilfsvorrichtung auch die beiden Teile der Raupenkette im Obertrum in eine exakte Montageposition zueinander gebracht, und die Kettenverbindung wird wieder geschlossen, indem die entsprechenden Scharnierbolzen gesetzt werden. Danach kann das Eingriffsglied aus der Raupenkette herausgenommen und die Hilfsvorrichtung in ihre Ausgangsstellung (Ruhestellung) zurückgefahren werden.

Anhand des in den Figuren teilweise schematisiert dargestellten Ausführungsbeispiels wird die Erfindung nachfolgend näher erläutert. Es zeigen:
- Fig. 1: einen Abschnitt eines Raupenträges in Seitenansicht und in perspektivischer Ansicht,
- Fig 2: eine perspektivische Ansicht der Trennstelle des Raupenträgers,
- Fig. 3: eine perspektivische Ansicht der auseinandergefahrenen Teile eines Raupenträger,
- Fig. 4: eine perspektivische Sicht auf den Raupenträger und die Hilfsvorrichtung
- Fig. 5: eine Seitenansicht des mit einem Fahrantrieb versehenen Teils des Raupenträgers mit schräg nach unten hängendem Kettenglied,
- Fig. 6: eine perspektivische Ansicht auf eine Schutzabdeckung für die Hilfsvorrichtung,
- Fig. 7: einen perspektivischen Schnitt in Längsrichtung und einen Schnitt in Querrichtung als Ansicht im Bereich der Eingriffsstelle des Eingriffsgliedes der Hilfsvorrichtung und
- Fig. 8: perspektivische Ansichten eines Sicherungsbolzens und eines Schiebestückes der Hilfsvorrichtung.

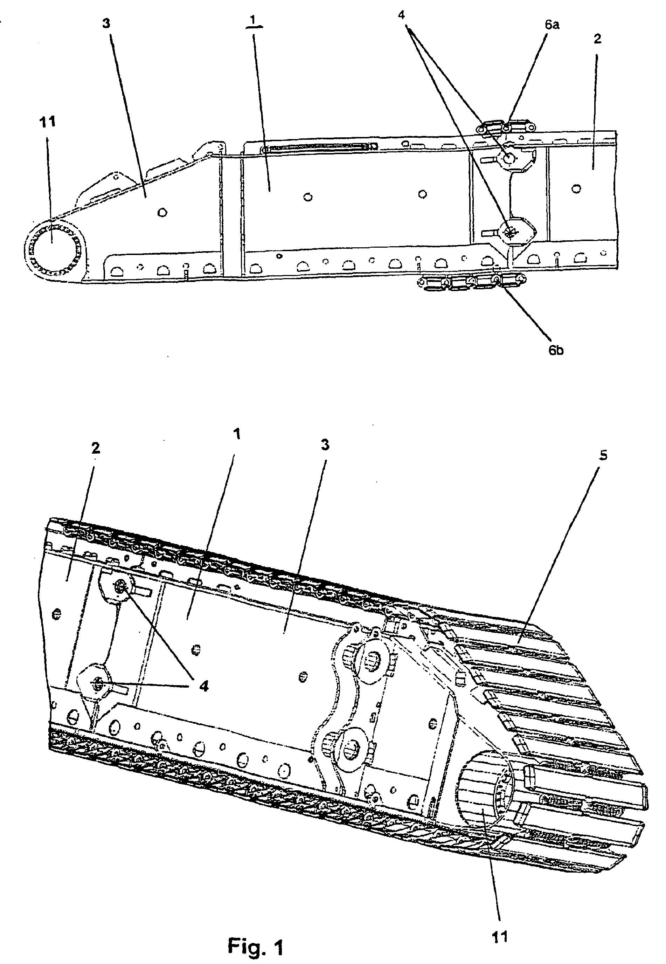

In Figur 1 ist ein Abschnitt eines Raupenträgers 1 in Seitenansicht und (um etwa 180° verdreht hierzu) in perspektivischer Ansicht dargestellt. Der Raupenträger 1 ist hier in zwei Teile teilbar. Der eine Teil ist mit einem schematisch als Zylinder angedeuteten Fahrantrieb 11 (z. B. Hydraulikmotor) versehen und stellt bezüglich der Spannung einer um den Raupenträger 1 umlaufenden Raupenkette 5 die Festseite 3 dar. Der andere Teil ist die Spannseite 2 des Raupenträgers 1, wobei die Spannmöglichkeit für die Raupenkette hier nicht näher dargestellt ist. Die Raupenkette 5 ist im unteren Teil von Figur 1 zusammenhängend, im oberen Teil dagegen nur mit wenigen Kettengliedern angedeutet. Die Spannseite 2 und die Festseite 3 des Raupenträgers 1 werden durch nicht näher dargestellte hydraulisch betätigbare Verbindungsbolzen 4 zusammengehalten bzw. sind durch deren Entfernung voneinander trennbar.

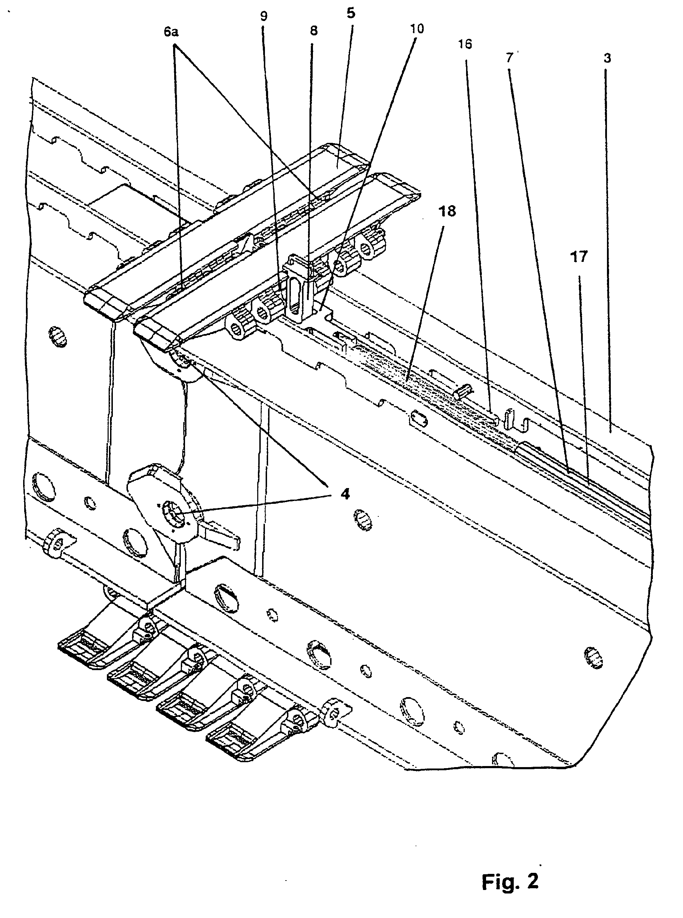

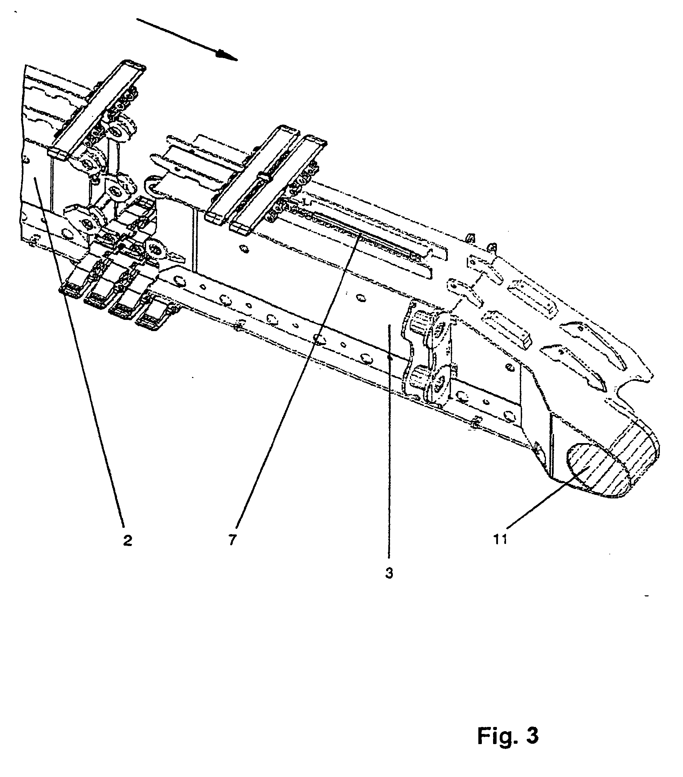

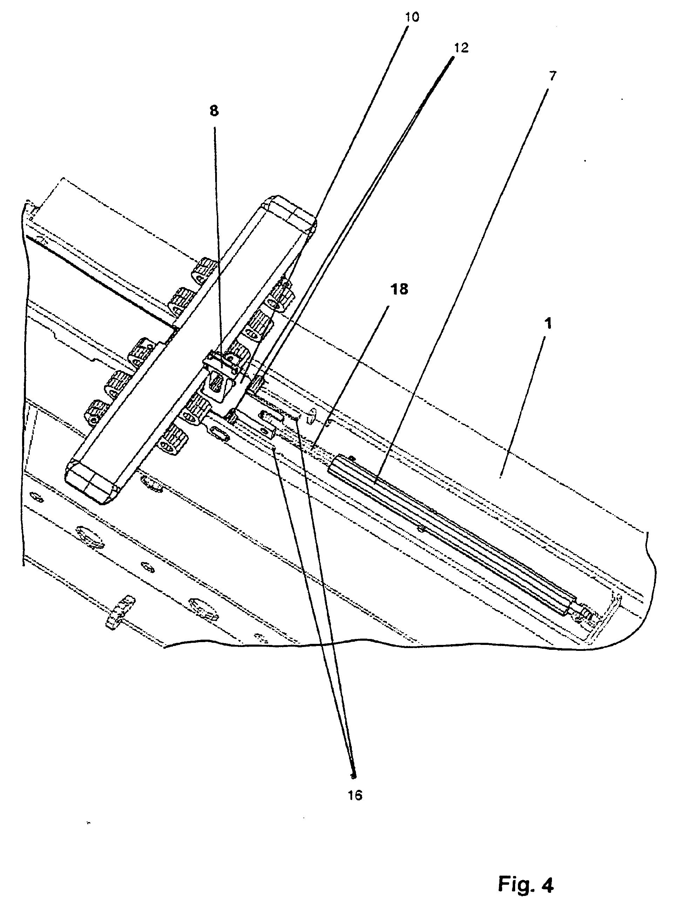

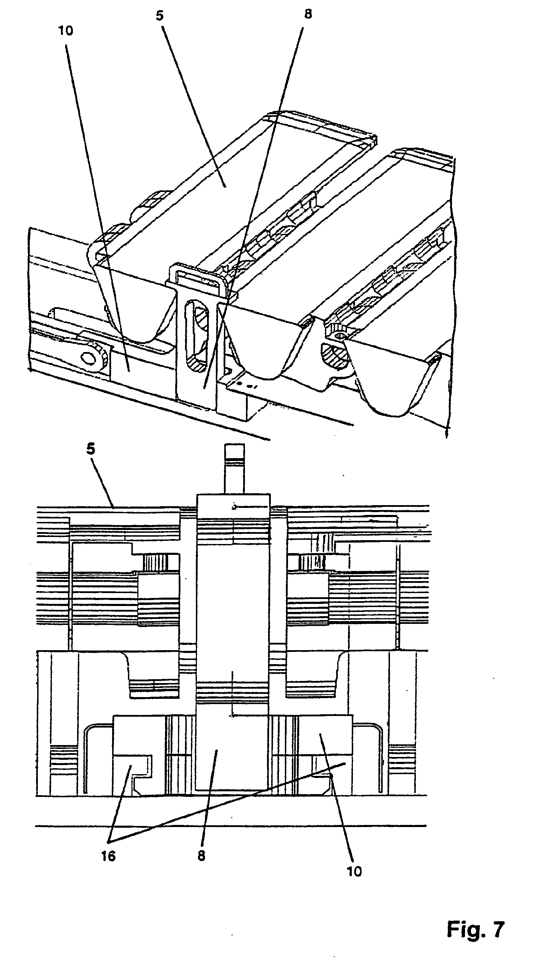

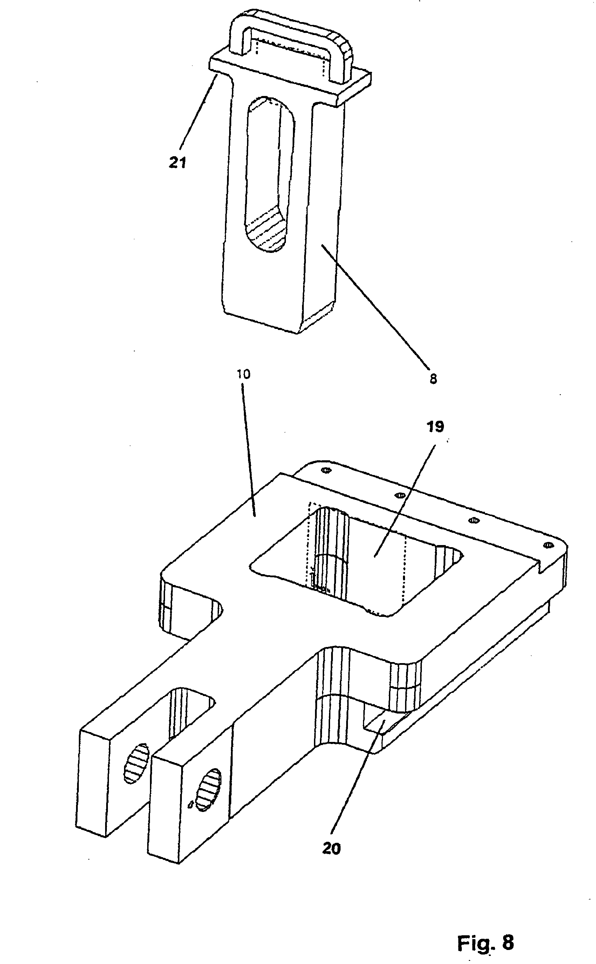

Aus Figur 2 geht hervor, dass die einzelnen Glieder der Raupenkette 5 durch Verbindungselemente in Form von Scharnierbolzen 6a lösbar miteinander verbunden sind. Weiterhin ist ebenso wie in Figur 3 und Figur 4 eine Hilfsvorrichtung 17 erkennbar, die in Form eines hydraulischen Zylinder/Kolben-Systems 7 ausgebildet ist. Die Hilfsvorrichtung 17 ist, wie insbesondere Figur 4 erkennen lässt, mit ihrem Zylindergehäuse an der Tragkonstruktion des Raupenträgers 1, und zwar an dessen Festseite 3 angelenkt, wobei sie sich unter dem Obertrum der Raupenkette 5 liegend parallel zur Längsachse des Raupenträgers 1 erstreckt. Statt eines Zylinder/Kolben-Systems 7 könnte beispielsweise auch ein Spindeltrieb oder ein anderes Linearantriebssystem vorgesehen sein. Eine Kolbenstange 18 des hydraulischen Zylinder/Kolben-Systems 7 ist mit einem Schiebestück 10 an ihrem freien Ende versehen, wobei die Verbindung des Schiebestücks 10 mit der Kolbenstange 18 über ein Drehgelenk mit horizontaler Drehachse (entsprechend der Anlenkung des Zylindergehäuses) realisiert ist. Das Schiebstück 10 ist im unteren Teil der Figur 8 näher dargestellt und zeichnet sich durch eine in Einbaulage vertikal verlaufende Verriegelungsöffnung 19 aus, in die ein Sicherungsbolzen 8 einführbar ist, der im oberen Teil der Figur 8 perspektivisch und in den Figuren 2 und 4 in Gebrauchslage dargestellt ist. Im Seitenbereich des Schiebstücks 10 ist jeweils eine Führungsnut 20 eingearbeitet, die mit einer komplementär hierzu ausgebildeten schienenartigen Linearführung 16 an der Tragkonstruktion der Festseite 3 zusammenwirkt und eine exakte lineare Führung des Schiebestücks 10 gewährleistet, wenn die Kolbenstange 18 ein- oder ausgefahren wird, und den Schiebekopf 10 bezüglich der Raupenkette 5 in einer gleichbleibenden Höhenlage hält. Figur 2 lässt erkennen, dass der Sicherungsbolzen 8 durch eine Kettenaussparung 9 im Verbindungsbereich zweier Kettenglieder der Raupenkette 5 hindurch in die Verriegelungsöffnung 19 des Schiebestücks 10 einführbar ist und in der Verriegelungsstellung jeweils mit einem Auflagekragen 21 (Figur 8) auf den mit Bodenplatten ausgebildeten Kettengliedern im Verbindungsbereich der beiden Kettenglieder der Raupenkette 5 aufliegt. Dies ist besonders in den beiden Schnittbildern der Figur 7 sichtbar, die jeweils einen Schnitt in Längsrichtung des Raupenträgers 1 (obere Darstellung) bzw. in Querrichtung (untere Darstellung) im Bereich der Eingriffsstelle des Eingriffsgliedes (Sicherungsbolzen 8) zeigen.

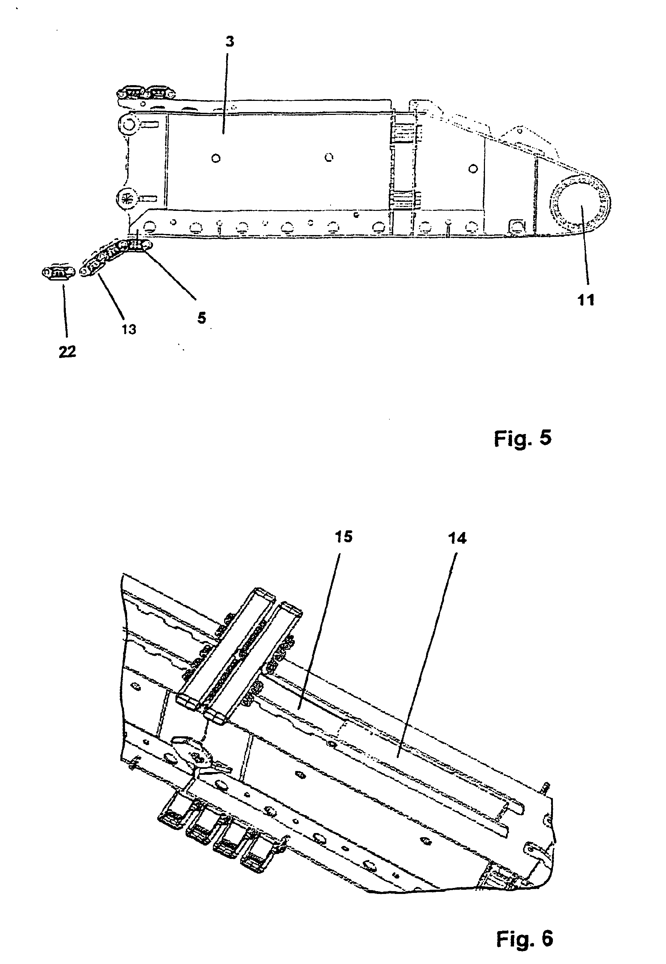

Zur Demontage des Raupenträgers 1, d. h. zu dessen Zerlegung in die Spannseite 2 und die Festseite 3 wird die Kolbenstange 18 der Hilfsvorrichtung 17 mit ihrem Schiebekopf 10 so in Richtung auf die Trennebene der beiden Teile des Raupenträgers 1, in der die Verbindungsbolzen 4 liegen, verfahren, dass die Verriegelungsöffnung 19 mit der Kettenaussparung 9 fluchtet, wie dies in Figur 2 der Fall ist. Zuvor ist durch Betätigung des Fahrantriebs 11 die Raupenkette 5 so positioniert worden, dass die in Figur 2 dargestellten beiden Kettenglieder des Obertrums mit ihrer Kettenverbindung (Scharnierbolzen 6a) ebenfalls etwa in der Trennebene liegen. In dieser Stellung wird dann von oben der Sicherungsbolzen 8 eingeführt, der in der in Figur 7 erkennbaren Lage durch Formschluss eine antriebstechnische Verbindung zwischen der Kolbenstange 18 und dem Obertrum der Raupenkette 5 bewirkt. Durch geringfügiges Verfahren der Kolbenstange 18 kann, nachdem die Kettenspannung insgesamt auf der Spannseite 2 gelockert wurde, die Kettenverbindung zwischen den beiden dargestellten oberen Kettengliedern der Raupenkette 5 gezielt entspannt werden, so dass die Scharnierbolzen 6a leichter entfernt werden können, um die Raupenkette 5 zu öffnen. Anschließend wird die Festseite 3 durch entsprechende Betätigung des Fahrantriebes 11 bei gleichzeitiger Rückfahrbewegung der Kolbenstange 18 ein Stück von der Spannseite 2 weggefahren. In vorteilhafter Weiterbildung der Erfindung wird die Rückfahrbewegung der Kolbenstange 18 und somit auch die Weite des Auseinanderfahrens der beiden Teile des Raupenträgers 1 begrenzt durch Anschlagbolzen 12 (Figur 4), die zuvor in die Festseite 3 des Raupenträgers 1 eingesetzt wurden und im Verfahrweg einen Festanschlag für das Schiebestück 10 bilden. Aus Figur 6 ist ersichtlich, dass durch ein Abdeckblech 14 und ein mit dem Schiebestück 10 mitfahrendes Schiebeblech 15, die in den Figuren 2, 3 und 4 nicht dargestellt wurden, die Hilfsvorrichtung 17 gegen Schmutz, der von den darüber befindlichen Kettengliedern der Raupenkette 5 herabfallen könnte, geschützt ist. Nach dem Auseinanderfahren der beiden Teile des Raupenträgers 1 (Pfeil in Figur 3) sind die Kettenglieder des Untertrums der Raupenkette 5 im Bereich der Trennstelle sehr gut zugänglich, so dass auch dort eine Auftrennung der Raupenkette 5 durch Entfernen der Scharnierbolzen 6b (Figur 1 oben) der entsprechenden Kettenverbindung leicht erfolgen kann. Anschließend werden die Enden der Raupenkette 5 in der so erreichten Position lagegesichert mit dem jeweiligen Teil (Festseite 3 bzw. Spannseite 2) verzurrt, so dass sich die Teilstücke der Raupenkette relativ zu dem jeweiligen Teil des Raupenträgers 1 nicht mehr verschieben können. Dies dient der Erleichterung der späteren Montage.

Für die Montage werden die einzelnen Schritte der Demontage im Wesentlichen in umgekehrter Reihenfolge durchgeführt, so dass dies nicht mehr im Einzelnen erneut erläutert werden muss. Es sei lediglich noch auf die Darstellung der Figur 5 hingewiesen, die die Festseite 3 des Raupenträgers 1 mit einem Teil der Raupenkette 5 sowie dem ersten Kettenglied 22 des Untertrums des der nicht dargestellten Spannseite 2 des Raupenträgers 1 zugeordneten Teils der Raupenkette 5 zeigt. Das untere Ende der Raupenkette 5 an der Festseite 3 ist,frei hängend an einem nicht dargestellten Hilfskran, soweit entzurrt, dass die beiden ersten Kettenglieder, insbesondere das erste Kettenglied 13 unter einem Winkel von etwa 45° schräg zur Horizontalen geneigt sind. In dieser Stellung ist eine problemlose Ausrichtung und Einfädelung in die entsprechenden Verbindungsteile am ersten Kettenglied 22 des Untertrums der Raupenkette 5 an der Spannseite 2 möglich, so dass die Scharnierbolzen 6b (Figur 1) leicht wieder eingesetzt werden können.

Der für die Hilfsvorrichtung zu treibende Aufwand ist sehr gering und ist durch die wesentliche Erleichterung und Verkürzung der Montage- und Demontagevorgänge sehr schnell amortisiert.

### Bezugszeichenliste:

- 1: Raupenträger
- 2: Spannseite
- 3: Festseite
- 4: Verbindungsbolzen
- 5: Raupenkette
- 6a, b: Scharnierbolzen
- 7: hydraulisches Zylinder/Kolben-System
- 8: Sicherungsbolzen
- 9: Kettenaussparung
- 10: Schiebestück
- 11: Fahrantrieb
- 12: Anschlagbolzen
- 13: Kettenglied (Festseite)
- 14: Abdeckblech
- 15: Schiebeblech
- 16: Linearführung
- 17: Hilfsvorrichtung
- 18: Kolbenstange
- 19: Verriegelungsöffnung
- 20: Führungsnut
- 21: Auflagekragen
- 22: Kettenglied (Spannseite)

## Patentansprüche

1. Raupenfahrzeug, insbesondere Fahrzeugkran, mit mindestens einem Raupenträger (1), der quer zur Laufrichtung einer um den Raupenträger (1) umlaufenden Raupenkette (5) geteilt ausgeführt ist, wobei zumindest ein Teil (3) des Raupenträgers (1) mit einem Fahrantrieb (11) versehen ist und zumindest ein anderer Teil (2) des Raupenträgers (1) zum Spannen der Raupenkette (5) ausgebildet ist und die Teile (2, 3) des Raupenträgers (1) über Verbindungselemente (4) lösbar miteinander verbindbar oder verbunden sind und wobei die Raupenkette (5) aus einer Vielzahl von als Bodenplatten (13) ausgebildeten Gliedern gebildet ist, die lösbar miteinander verbunden sind,
**dadurch gekennzeichnet,**
**dass** als Montage- und Demontagehilfe an einem der Teile (2, 3) eine Hilfsvorrichtung (17) angeordnet ist, die mit einem Eingriffsglied versehen oder versehbar ist, welches zur Herstellung einer vorrübergehenden antriebstechnischen Verbindung zwischen Hilfsvorrichtung (17) und der Raupenkette (5) einsetzbar ist, und dass die Hilfsvorrichtung (17) das Eingriffsglied unabhängig vom Fahrantrieb in Längsrichtung des Raupenträgers (1) wahlweise hin- und herbewegen kann.

2. Raupenfahrzeug nach Anspruch 1,
**dadurch gekennzeichnet,**
**dass** der Raupenträger (1) in genau zwei Teile geteilt ist.

3. Raupenfahrzeug nach Anspruch 2,
**dadurch gekennzeichnet,**
**dass** der eine Teil als Festseite (3) mit einem Fahrantrieb (11) und der andere Teil als Spannseite (2), insbesondere als Spannseite (2) ohne Fahrantrieb ausgebildet ist.

4. Raupenfahrzeug nach einem der Ansprüche 1 bis 3,
**dadurch gekennzeichnet,**
**dass** die Hilfsvorrichtung (17) im Nahbereich des Obertrums der Raupenkette (5) angeordnet ist.

5. Raupenfahrzeug nach einem der Ansprüche 1 bis 4,
**dadurch gekennzeichnet,**
**dass** die Hilfsvorrichtung (17) an einem mit einem Fahrantrieb (11) versehenen Teil (3) des Raupenträgers (1) angeordnet ist.

6. Raupenfahrzeug nach einem der Ansprüche 1 bis 5,
**dadurch gekennzeichnet,**
**dass** die Hilfsvorrichtung (17) als Linearantrieb ausgebildet und motorisch angetrieben ist.

7. Raupenfahrzeug nach Anspruch 6,
**dadurch gekennzeichnet,**
**dass** die Hilfsvorrichtung (17) als hydraulisches Zylinder/Kolben-System (7) ausgebildet ist.

8. Raupenfahrzeug nach einem der Ansprüche 1 bis 7,
**dadurch gekennzeichnet,**
**dass** als Eingriffsglied ein Sicherungsbolzen (8) vorgesehen ist, der durch eine jeweils zwischen zwei unmittelbar benachbarten Gliedern der Raupenkette (5) vorgesehene Kettenaussparung (9) hindurch in ein Schiebestück (10) einsetzbar ist, welches mit einem ausfahrbaren Teil der Hilfsvorrichtung (17) verbunden ist.

9. Raupenfahrzeug nach den Ansprüchen 7 und 8,
**dadurch gekennzeichnet,**
**dass** das Schiebestück (10) an einer ausfahrbaren Kolbenstange des hydraulischen Zylinder/Kolben-Systems (7), insbesondere mittels eines Drehgelenks mit horizontaler Drehachse, befestigt ist.

10. Raupenfahrzeug nach einem der Ansprüche 8 bis 9,
**dadurch gekennzeichnet,**
**dass** das Schiebestück (10) über eine Linearführung (16) geführt ist.

11. Raupenfahrzeug nach einem der Ansprüche 8 bis 10,
**dadurch gekennzeichnet,**
**dass** der Verschiebeweg des Schiebestücks (10) durch einen Anschlag, insbesondere durch einen lösbar angeordneten Anschlagbolzen (12), begrenzbar ist.

12. Raupenfahrzeug nach einem der Ansprüche 1 bis 10,
**dadurch gekennzeichnet,**
**dass** die Hilfsvorrichtung (17) durch ein Abdeckblech (14) schützbar ist.

13. Raupenfahrzeug nach einem der Ansprüche 8 bis 12,
**dadurch gekennzeichnet,**
**dass** ein Schiebeblech (15) vorgesehen ist, welches zum Schutz des ausfahrbaren Teils der Hilfsvorrichtung (17) mit dem Schiebestück (10) selbsttätig mitbewegbar ist.

14. Verfahren zur Demontage eines Raupenträgers (1) an einem Raupenfahrzeug nach einem der Ansprüche 1 bis 13,
**dadurch gekennzeichnet,**
- **dass** die Raupenkette (5) mit der vorgesehenen Trennstelle zweier unmittelbar benachbarter Glieder der Raupenkette (5) durch Betätigung des Fahrantriebs (11) des Raupenträges (1) im Wesentlichen bündig mit der Trennstelle der beiden Teile des Raupenträgers (1) positioniert wird,
- **dass** die Raupenkette (5) entspannt wird,
- **dass** die Hilfsvorrichtung (17) am Obertrum der Raupenkette (5) so positioniert wird, dass das Eingriffsglied zur Herstellung einer antriebstechnischen Verbindung zwischen der Raupenkette (5) und der Hilfsvorrichtung (17) außerhalb der vorgesehenen Trennstelle eingesetzt werden kann,
- **dass** nach Herstellung der antriebstechnischen Verbindung die Kettenverbindung aus Scharnierbolzen (6a) an der vorgesehenen Trennstelle der Raupenkette (5) gelöst wird, wobei gegebenenfalls durch gezielte Betätigung der Verfahrbewegung der Hilfsvorrichtung (17) eine Lockerung der Verbindung bewirkt wird,
- **dass** anschließend die Verbindungselemente der beiden Teile des Raupenträgers (1) gelöst werden,
- **dass** danach durch Betätigung des Fahrantriebs (11) an dem die Hilfsvorrichtung (17) aufweisenden Teil des Raupenträgers (1) die beiden Teile des Raupenträgers (1) ein Stück auseinandergefahren werden, wobei die Hilfsvorrichtung (17) mit dem in Eingriff bleibenden Eingriffsglied entsprechend zurückgefahren wird,
- **dass** dann nahe der Trennstelle des Teils des Raupenträgers (1), der nicht mit der Hilfsvorrichtung (17) versehen ist, auch im Untertrum der Raupenkette (5) die Verbindung (6b) zweier Glieder der Raupenkette (5) gelöst wird,
- **dass** die Enden der aufgetrennten Raupenkette (5) an den Teilen des Raupenträgers (1) lagegesichert verzurrt werden und
- **dass** die Teile des Raupenträgers (1) jeweils als Einheit mit den zugehörigen Teilen der Raupenkette (5) transportiert werden.

15. Verfahren zur Montage eines nach dem Verfahren gemäß Anspruch 14 demontierten Raupenträgers (1),
**dadurch gekennzeichnet,**
- **dass** der nicht mit der Hilfsvorrichtung (17) versehene Teil des Raupenträgers (1) auf dem Boden abgestellt und der an ihm angeordnete Teil der Raupenkette (5) entzurrt wird,
- **dass** der mit der Hilfsvorrichtung (17) versehene Teil des Raupenträgers (1) mittels eines Hilfskrans angehoben und schwebend derart ausgerichtet wird, dass seine Längsachse mit der Längsachse des anderen Teils des Raupenträgers (1) in einer gemeinsamen Ebene liegt und dass das erste Glied (13) im Untertrum seines Teils der Raupenkette (5), nachdem es soweit entzurrt wurde, dass es schräg nach unten geneigt frei hängt, in Montageposition mit dem entsprechenden Glied des Untertrums des Teils der Raupenkette (5) am anderen Teil des Raupenträgers (1) gebracht wird,
- **dass** dann die beiden Teile der Raupenkette (5) im Untertrum durch die Scharnierbolzen (6b) miteinander verbunden werden,
- **dass** anschließend der mit der Hilfsvorrichtung (17) versehene Teil des Raupenträgers (1) vom Hilfskran abgesetzt wird,
- **dass** die beiden Teile des Raupenträges (1) durch Betätigung des Fahrantriebs (11) bei gleichzeitigem Ausfahren der Hilfsvorrichtung (17) mit dem weiterhin in Eingriff befindlichen Eingriffsglied wieder zusammengefahren werden,
- **dass** die Verbindungselemente zur Verbindung der beiden Teile des Raupenträgers (1) wieder eingesetzt werden,
- **dass** dann mittels der Hilfsvorrichtung (17) die beiden Teile der Raupenkette (5) im Obertrum in exakte Montageposition gebracht und die Kettenverbindung (6a) wieder hergestellt wird und
- **dass** schließlich das Eingriffsglied aus der Raupenkette (5) herausgenommen wird.

## Claims

1. Caterpillar-tracked vehicle, in particular a mobile crane, with at least one caterpillar-track carrier (1) which is divided transversely to the movement direction of a caterpillar track (5) moving around the track carrier (1), such that at least one part of the track carrier (1) is provided with a drive unit (11) and at least one other part of the track carrier (1) is formed so as to tension the track (5) and the said parts of the track carrier (1) can be or are connected to one another by means of connecting element, and such that the caterpillar track (5) is formed of a plurality of links in the form of bedplates (13) which are connected detachably to one another,
**characterised in that**
as an assembly and dismantling aid an auxiliary device (17) is arranged on one of the said parts, which is or can be provided with an engagement element that can be used to form a temporary driving connection between the auxiliary device (17) and the track (5), and the auxiliary device (17) can move the engagement element back and forth as desired in the longitudinal direction of the track carrier (1) independently of the drive unit.

2. Caterpillar-tracked vehicle according to Claim 1,
**characterised in that**
the track carrier (1) is divided into exactly two parts.

3. Caterpillar-tracked vehicle according to Claim 2,
**characterised in that**
one part is formed as a fixed side (3) with a drive (11) and the other part as a tensioning tide (2) without a drive.

4. Caterpillar-tracked vehicle according to any of Claims I to 3,
**characterised in that**
the auxiliary device (17) is arranged close to the upper strand of the track (5).

5. Caterpillar-tracked vehicle according to any of Claims 1 to 4,
**characterised in that**
the auxiliary device (17) is arranged on a part of the track carrier (1) provided with a drive (11).

6. Caterpillar-tracked vehicle according to any of Claims 1 to 5,
**characterised in that**
the auxiliary device (17) is formed as a linear drive and is driven by a motor.

7. Caterpillar-tracked vehicle according to Claim 6,
**characterised in that**
the auxiliary device (17) is formed as a hydraulic cylinder/piston system (7).

8. Caterpillar-tracked vehicle according to any of Claims 1 to 7,
**characterised in that**
a securing bolt (8) is provided as the engagement element, which can be inserted through a track cutout (9) provided between two respective immediately adjacent links of the track (5) into a sliding element (10), which is connected to a retractable part of the auxiliary device (17).

9. Caterpillar-tracked vehicle according to Claims 7 and 8,
**characterised in that**
the sliding element (10) is attached to a retractable piston rod of the hydraulic cylinder/piston system (7), in particular by means of a swivel joint with a horizontal swivel axis.

10. Caterpillar-tracked vehicle according to either of Claims 8 or 9,
**characterised in that**
the sliding element (10) is guided by a linear guide (16).

11. Caterpillar-tracked vehicle according to any of Claims 8 to 10,
**characterised in that**
the displacement of the sliding element (10) can be restricted by an end-stop, in particular by a detachably arranged abutment bolt (12).

12. Caterpillar-tracked vehicle according to any of Claims 1 to 10,
**characterised in that**
the auxiliary device (17) can be protected by a cover-plate (14).

13. Caterpillar-tracked vehicle according to any of Claims 8 to 12,
**characterised in that**
a slide-plate (15) is provided, which can automatically move along with the sliding element (10) to protect the retractable part of the auxiliary device (17).

14. Method for dismantling a track carrier (1) on a caterpillar-tracked vehicle according to any of Claims 1 to 13,
**characterised in that**
- by actuating the drive (11) of the track carrier (1), the track (5) is positioned with the separation points provided in two immediately adjacent links of the track (5) essentially level with the separation points of the two parts of the track carrier (1),
- the track (5) is slackened,
- the auxiliary device (17) on the upper strand of the track (5) is positioned such that the engagement element for forming a driving connection between the track (5) and the auxiliary device (17) can be used away from the separation points provided,
- once the driving connection has been formed, the track connection consisting of a hinge-pin (6a) at the separation points of the track (5) provided is released, and if necessary the connection is loosened by controlled actuation of the movement of the auxiliary device (17),
- the connecting element of the two parts of the track carrier (1) are then released,
- thereafter, by actuating the drive (11) on the part of the track carrier (1) that comprises the auxiliary device (17) the two parts of the track carrier (1) are moved a short way apart, so that the auxiliary device (17) with the engagement element that remains engaged is correspondingly retracted,
- then, near the separation point of the part of the track carrier (1) not provided with the auxiliary device (17), the connection (6b) of two links of the track (5) is also released in the lower strand of the track (5),
- the ends of the parted track (5) are clamped in secure positions on the parts of the track carrier (1), and
- the parts of the track carrier (1) are transported in each case as a unit with the associated parts of the track (5).

15. Method for assembling a track carrier (1) dismantled in accordance with the method of Claim 14,
**characterised in that**
- the part of the track carrier (1) not provided with the auxiliary device (17) is placed on the ground and the part of the track (5) arranged on it is unclamped,
- the part of the track carrier (1) provided with the auxiliary device (17) is raised by means of an auxiliary crane and, while suspended, is orientated so that its longitudinal axis lies in a common plane with the longitudinal axis of the other part of the track carrier (1) and the first link (13) in the lower strand of its portion of the track (5), after having been unclamped far enough for it to hang free and inclined obliquely downwards, is brought into position for assembly with the corresponding link of the lower strand of the portion of the track (5) on the other part of the track carrier (1),
- the two portions of the track (5) in the lower strand are then connected to one another by the hinge-pin (6b),
- the part of the track carrier (1) provided with the auxiliary device (17) is then lowered by the auxiliary crane,
- the two parts of the track carrier (1) are brought together again by actuating the drive (11) while at the same time extending the auxiliary device (17) with the still engaged engagement element,
- the connecting elements are used to join the two parts of the track carrier (1),
- then, by means of the auxiliary device (17) the two parts of the track (5) in the upper strand are brought to exact position for assembly and the track connection (6a) is made again, and
- finally, the engagement element is extracted from the track (5).

## Revendications

1. Véhicule à chenilles, en particulier une grue mobile, comportant au moins un support de chenille (1), lequel est réalisé en plusieurs parties perpendiculairement au sens de marche d'une chenille (5) circulant autour du support de chenilles (1), au moins une partie (3) du support de chenille (1) étant équipée d'un système d'entraînement (11) et au moins une autre partie (2) du support de chenille (1) étant conçue pour tendre la chenille (5) et les parties (2, 3) du support de chenille (1) étant reliées ou pouvant être reliées entre elles de façon amovible par l'intermédiaire d'éléments de liaison (4) et la chenille (5) étant constituée d'une pluralité d'éléments réalisés sous la forme de patins (13), lesquels sont reliés entre eux de façon amovible,
**caractérisé en ce qu'**un dispositif auxiliaire (17) est agencé en tant qu'aide au montage et au démontage au niveau de l'une des parties (2, 3), lequel dispositif est équipé ou peut être équipé d'un élément d'engrènement, lequel élément peut être installé en vue de la réalisation d'une liaison temporaire d'entraînement entre le dispositif auxiliaire (17) et la chenille (5), et **en ce que** le dispositif auxiliaire (17) peut animer l'élément d'engrènement d'un mouvement de va-et-vient au choix dans le sens longitudinal du support de chenille (1), indépendamment du système d'entraînement.

2. Véhicule à chenilles selon la revendication 1,
**caractérisé en ce que** le support de chenille (1) est divisé en exactement deux parties.

3. Véhicule à chenilles selon la revendication 2,
**caractérisé en ce qu'**une partie est réalisée sous la forme d'un côté fixe (3) avec un système d'entraînement (11) et l'autre partie sous la forme d'un côté tendeur (2), en particulier sous la forme d'un côté tendeur (2) sans système d'entraînement.

4. Véhicule à chenilles selon l'une des revendications 1 à 3,
**caractérisé en ce que** le dispositif auxiliaire (17) est agencé à proximité du brin supérieur de la chenille (5).

5. Véhicule à chenilles selon l'une des revendications 1 à 4,
**caractérisé en ce que** le dispositif auxiliaire (17) est agencé au niveau d'une partie (3) du support de chenille (1) équipée d'un système d'entraînement (11).

6. Véhicule à chenilles selon l'une des revendications 1 à 5,
**caractérisé en ce que** le dispositif auxiliaire (17) est réalisé sous la forme d'un système d'entraînement linéaire et est entraîné par un moteur.

7. Véhicule à chenilles selon la revendication 6,
**caractérisé en ce que** le dispositif auxiliaire (17) est réalisé sous la forme d'un système hydraulique à cylindre et piston (7).

8. Véhicule à chenilles selon l'une des revendications 1 à 7,
**caractérisé en ce qu'**une goupille de sécurité (8) est prévue en tant qu'élément d'engrènement, laquelle peut être installée dans une pièce coulissante (10) par le biais d'un évidement de la chenille (9) prévu entre deux éléments directement adjacents de la chenille (5), laquelle pièce coulissante est reliée à une partie télescopique du dispositif auxiliaire (17).

9. Véhicule à chenilles selon les revendications 7 et 8,
**caractérisé en ce que** la pièce coulissante (10) est fixée à une tige de piston télescopique du système hydraulique à cylindre et piston (7), en particulier au moyen d'une articulation avec un axe d'articulation horizontal.

10. Véhicule à chenilles selon l'une des revendications 8 à 9,
**caractérisé en ce que** la pièce coulissante (10) est guidée grâce à un guidage linéaire (16).

11. Véhicule à chenilles selon l'une des revendications 8 à 10,
**caractérisé en ce que** la course de déplacement de la pièce coulissante (10) peut être limitée par une butée, en particulier par un boulon de butée (12) agencé de façon amovible.

12. Véhicule à chenilles selon l'une des revendications 1 à 10,
**caractérisé en ce que** le dispositif auxiliaire (17) peut être protégé par une tôle de protection (14).

13. Véhicule à chenilles selon l'une des revendications 8 à 12,
**caractérisé en ce qu'**il est prévu une tôle coulissante (15), laquelle peut être entraînée automatiquement avec la pièce coulissante (10) en vue de protéger la partie télescopique du dispositif auxiliaire (17).

14. Procédé pour démonter un support de chenille (1) sur un véhicule à chenilles selon l'une des revendications 1 à 13,
**caractérisé en ce que**
- la chenille (5) est positionnée avec le point de séparation prévu de deux éléments directement adjacents de la chenille (5) par actionnement du système d'entraînement (11) du support de chaîne (1) essentiellement au même niveau que le point de séparation des deux parties du support de chenille (1),
- la chenille (5) est détendue,
- le dispositif auxiliaire (17) au niveau du brin supérieur de la chenille (5) est positionné de telle sorte que l'élément d'engrènement peut être installé en vue de la réalisation d'une liaison d'entraînement entre la chenille (5) et le dispositif auxiliaire (17) en-dehors du point de séparation prévu,
- après la réalisation de la liaison d'entraînement, la liaison de la chaîne est détachée des boulons de charnière (6a) au niveau du point de séparation prévu de la chenille (5), un desserrage de la liaison étant provoqué le cas échéant par un actionnement ciblé de la course de déplacement du dispositif auxiliaire (17),
- les éléments de liaison des deux parties du support de chenille (1) sont ensuite détachés,
- en actionnant le système d'entraînement (11) au niveau de la partie du support de chenille (1) présentant le dispositif auxiliaire (17), les deux parties du support de chenille (1) sont ensuite un peu écartées, le dispositif auxiliaire (17) étant ramené en conséquence avec l'élément d'engrènement restant engrené,
- la liaison (6b) de deux éléments de la chenille (5) est alors détachée à proximité du point de séparation de la partie du support de chenille (1), laquelle n'est pas équipée du dispositif auxiliaire (17), également dans le brin inférieur de la chenille (5),
- les extrémités de la chenille (5) séparée sont arrimées solidement au niveau des parties du support de chenille (1) et
- les parties du support de chenille (1) sont chacune transportées en tant qu'unité avec les parties correspondantes de la chenille (5).

15. Procédé pour monter un support de chenille (1) démonté conformément au procédé selon la revendication 14,
**caractérisé en ce que**,
- la partie du support de chenille (1) qui n'est pas équipée du dispositif auxiliaire (17) est déposée au sol et la partie de la chenille (5) agencée à son niveau est désarrimée,
- la partie du support de chenille (1) qui est équipée du dispositif auxiliaire (17) est soulevée au moyen d'une potence de manutention et est orientée en suspension de telle sorte que son axe longitudinal se situe sur un plan commun avec l'axe longitudinal de l'autre partie du support de chenille (1) et **en ce que** le premier élément (13) dans le brin inférieur de sa partie de la chenille (5), une fois qu'il a été désarrimé jusqu'à ce qu'il retombe librement incliné vers le bas, est amené en position de montage avec l'élément correspondant du brin inférieur de la partie de la chenille (5) au niveau de l'autre partie du support de chenille (1),
- les deux parties de la chenille (5) sont alors reliées entre elles dans le brin inférieur grâce aux boulons de charnière (6b),
- la partie du support de chenille (1) équipée du dispositif auxiliaire (17) est ensuite détachée de la potence de manutention,
- les deux parties du support de chenille (1) sont de nouveau rapprochées par actionnement du système d'entraînement (11) lors de la sortie simultanée du dispositif auxiliaire (17) avec l'élément d'engrènement se trouvant encore engrené,
- les éléments de liaison destinés à la liaison des deux parties du support de chenille (1) sont de nouveau installés,
- les deux parties de la chenille (5) sont ensuite amenées en position de montage exacte dans le brin supérieur au moyen du dispositif auxiliaire (17) et la liaison de la chaîne (6a) est de nouveau réalisée et
- l'élément d'engrènement est enfin retiré de la chenille (5).
